# EUROPEAN PATENT APPLICATION

(11) **EP 3 930 140 A1**
(43) Date of publication of application: **29.12.2021**
(21) Application number: 19920806.7
(22) Date of filing: 25.03.2019
(51) Int. Cl.: H02J 7/04, H02J 7/00

(54) **BATTERY CHARGING METHOD, APPARATUS AND DEVICE, AND READABLE STORAGE MEDIUM**

(71) Applicant: GUANGDONG OPPO MOBILE TELECOMMUNICATIONS CORP., LTD., Dongguan, Guangdong 523860 (CN)
(72) Inventor: YANG, Xin, Dongguan, Guangdong 523860 (CN)
(74) Representative: Manitz Finsterwald Patent- und Rechtsanwaltspartnerschaft mbB
(86) International application number: PCT/CN2019/079540
(87) International publication number: WO 2020/191583

(57) **Abstract**

Disclosed are a battery charging method, apparatus and device, and a readable storage medium. The battery charging method comprises: acquiring the current actual capacity of a battery; and determining, according to the current actual capacity of the battery, a charging current of the battery at a constant-current charging stage. The method can obtain the current actual capacity of a battery by means of continuously measuring the capacity of the battery, and continuously adjust, according to the actual capacity, a charging current of the battery at a constant-current charging stage, thereby slowing down the aging and attenuation of the battery to the greatest extent and prolonging the service life of the battery.

## Description

### TECHNICAL FIELD

The disclosure relates to battery charging technologies, especially to a battery charging method, an apparatus, a device and a readable storage medium.

### BACKGROUND

With continuous development of fast charging technologies, a charging speed of a battery is getting faster and faster. However, as the charging speed of the battery increases, an impact on a service life of the battery goes increasing, and an aging rate of the battery also becomes fast.

At present, a research on improving the service life of the battery is generally focused on improvement of a battery system, such as improving structural stability of cathode and anode materials, i.e., coating or doping technologies. However, inventors found that, in research processes, in addition to improving the battery system itself, the improvement of the service life of the battery may also be made from actual usage of the battery, such as from a point of charging view.

The above information disclosed in the background technology is only used to enhance understanding of the background technology of the present disclosure, and therefore it may include information that does not constitute related art known to those skilled in the art.

### SUMMARY

A battery charging method, an apparatus, a device and a readable storage medium are therefore provided in the present disclosure.

Other features and advantages of the present disclosure will be apparent, or partly, obtained through practices of the present disclosure through the detailed description below.

According to a first aspect of the present disclosure, a battery charging method is provided. The method includes: obtaining a present actual capacity of the battery; and determining a charging current of the battery during a constant current charging stage according to the present actual capacity of the battery.

According to an implementation of the present disclosure, the method further includes: controlling to charge the battery with the determined charging current during the constant current charging stage.

According to an implementation of the present disclosure, determining the charging current of the battery during the constant current charging stage according to the present actual capacity of the battery includes: calculating the charging current, based on a same rate used during the constant current charging stage in a previous charging process, according to the present actual capacity of the battery, in response to the present actual capacity of the battery being less than a stored actual capacity of the battery measured after a previous charging is completed or before a previous charging.

According to an implementation of the present disclosure, determining a charging current of the battery during a constant current charging stage according to the present actual capacity of the battery further includes: determining a charging current of the battery during the constant current charging stage in the previous charging process as the charging current in response to the present actual capacity of the battery being greater than or equal to the stored actual capacity of the battery measured after the previous charging is completed or before the previous charging.

According to an implementation of the present disclosure, wherein determining the charging current of the battery during the constant current charging stage according to the present actual capacity of the battery includes: inputting the present actual capacity of the battery into a charging current determining model to output the charging current according to the charging current determining model; in which the charging current determining model is a model established based on big data learning.

According to an implementation of the present disclosure, the method further includes: determining the cut-off current of the battery during the constant voltage charging stage according to the present actual capacity of the battery.

According to an implementation of the present disclosure, determining the cut-off current of the battery during the constant voltage charging stage according to the present actual capacity of the battery includes: inputting the present actual capacity of the battery into a cut-off current determining model to output the cut-off current according to the cut-off current determining model; in which the cut-off current determining model is a model established based on big data learning.

According to an implementation of the present disclosure, the method further includes: controlling to stop a constant voltage charging process in response to the charging current of the battery dropping to the cut-off current during the constant voltage charging stage.

According to an implementation of the present disclosure, determining the charging current of the battery during the constant current charging stage according to the present actual capacity of the battery includes: determining charging currents of the battery during different constant current charging stages respectively according to the present actual capacity of the battery.

According to an implementation of the present disclosure, determining the cut-off current of the battery during the constant voltage charging stage according to the present actual capacity of the battery includes: determining cut-off currents of the battery during different constant voltage charging stages respectively according to the present actual capacity of the battery.

According to another aspect of the present disclosure, a battery charging apparatus is provided. The apparatus includes: a battery capacity obtaining module, configured to obtain a present actual capacity of a battery; and a charging current determining module, configured to determine a charging current of the battery during a constant current charging stage according to the present actual capacity of the battery.

According to yet another aspect of the present disclosure, a device to be charged is provided. The device to be charged includes: a battery and a control module. The control module is configured to obtain a present actual capacity of the battery and determine a charging current of the battery during a constant current charging stage according to the present actual capacity of the battery.

According to an implementation of the present disclosure, the control module is further configured to control to charge the battery with the determined charging current during the constant current charging stage.

According to an implementation of the present disclosure, the control module is further configured to provide the determined charging current to a wireless charging apparatus or a power supply apparatus.

According to an implementation of the present disclosure, the control module is configured to calculate the charging current, based on a same rate used during the constant current charging stage in a previous charging process, according to the present actual capacity of the battery in response to the present actual capacity of the battery being less than a stored actual capacity of the battery measured after a previous charging is completed or before a previous charging.

According to an implementation of the present disclosure, the control module is further configured to determine a charging current of the battery during the constant current charging stage in the previous charging process as the charging current in response to the present actual capacity of the battery being greater than or equal to the stored actual capacity of the battery measured after the previous charging is completed or before the previous charging.

According to an implementation of the present disclosure, the control module is configured to input the present actual capacity of the battery into a charging current determining model to output the charging current according to the charging current determining model. The charging current determining model is a model established based on big data learning.

According to an implementation of the present disclosure, the control module is further configured to determine the cut-off current of the battery during the constant voltage charging stage according to the present actual capacity of the battery.

According to an implementation of the present disclosure, the control module is configured to input the present actual capacity of the battery into a cut-off current determining model to output the cut-off current according to the cut-off current determining model. The cut-off current determining model is a model established based on big data learning.

According to an implementation of the present disclosure, the control module is further configured to control to stop a constant voltage charging process in response to the charging current of the battery dropping to the cut-off current during the constant voltage charging stage.

According to an implementation of the present disclosure, the control module is further configured to provide the determined cut-off current to the wireless charging apparatus or the power supply apparatus.

According to an implementation of the present disclosure, the control module is configured to determine charging currents of the battery during different constant current charging stages respectively according to the present actual capacity of the battery.

According to an implementation of the present disclosure, the control module is configured to determine cut-off currents of the battery during different constant voltage charging stages respectively according to the present actual capacity of the battery.

According to yet another aspect of the present disclosure, a wireless charging apparatus is provided. The wireless charging apparatus includes a control module, configured to obtain a present actual capacity of the battery and determine a charging current of the battery during a constant current charging stage according to the present actual capacity of the battery

According to an implementation of the present disclosure, the control module is further configured to control to charge the battery with the determined charging current during the constant current charging stage.

According to an implementation of the present disclosure, the control module is configured to the control module is configured to calculate the charging current, based on a same rate used during the constant current charging stage in a previous charging process, according to the present actual capacity of the battery, in response to the present actual capacity of the battery being less than a stored actual capacity of the battery measured after a previous charging is completed or before a previous charging.

According to an implementation of the present disclosure, the control module is further configured to determine the charging current of the battery during the constant current charging stage in the previous charging process as the charging current in response to the present actual capacity of the battery being greater than or equal to the stored actual capacity of the battery measured after the previous charging is completed or before the previous charging.

According to an implementation of the present disclosure, the control module is configured to input the present actual capacity of the battery into a charging current determining model to output the charging current according to the charging current determining model. The charging current determining model is a model established based on big data learning.

According to an implementation of the present disclosure, the control module is further configured to determine the cut-off current of the battery during the constant voltage charging stage according to the present actual capacity of the battery.

According to an implementation of the present disclosure, the control module is configured to input the present actual capacity of the battery into a cut-off current determining model to output the cut-off current according to the cut-off current determining model. The cut-off current determining model is a model established based on big data learning.

According to an implementation of the present disclosure, the control module is further configured to control to stop a constant voltage charging process in response to the charging current of the battery dropping to the cut-off current during the constant voltage charging stage.

According to an implementation of the present disclosure, the control module is configured to determine charging currents of the battery during different constant current charging stages respectively according to the present actual capacity of the battery.

According to an implementation of the present disclosure, the control module is configured to determine cut-off currents of the battery during different constant voltage charging stages respectively according to the present actual capacity of the battery.

According to yet another aspect of the present disclosure, a power supply apparatus is provided. The power supply apparatus includes a control module, configured to obtain a present actual capacity of the battery and determine a charging current of the battery during a constant current charging stage according to the present actual capacity of the battery.

According to an implementation of the present disclosure, the control module is further configured to control to charge the battery with the determined charging current during the constant current charging stage.

According to an implementation of the present disclosure, the control module is configured to calculate the charging current, based on a same rate used during the constant current charging stage in a previous charging process, according to the present actual capacity of the battery, in response to the present actual capacity of the battery being less than a stored actual capacity of the battery measured after a previous charging is completed or before a previous charging.

According to an implementation of the present disclosure, the control module is further configured to determine a charging current of the battery during the constant current charging stage in the previous charging process as the charging current in response to the present actual capacity of the battery being greater than or equal to the stored actual capacity of the battery measured after the previous charging is completed or before the previous charging.

According to an implementation of the present disclosure, the control module is configured to input the present actual capacity of the battery into a charging current determining model to output the charging current according to the charging current determining model. The charging current determining model is a model established based on big data learning.

According to an implementation of the present disclosure, the control module is further configured to determine the cut-off current of the battery during the constant voltage charging stage according to the present actual capacity of the battery.

According to an implementation of the present disclosure, the control module is configured to input the present actual capacity of the battery into a cut-off current determining model to output the cut-off current according to the cut-off current determining model. The cut-off current determining model is a model established based on big data learning.

According to an implementation of the present disclosure, the control module is further configured to control to stop a constant voltage charging process in response to the charging current of the battery dropping to the cut-off current during the constant voltage charging stage.

According to an implementation of the present disclosure, the control module is configured to determine charging currents of the battery during different constant current charging stages respectively according to the present actual capacity of the battery.

According to an implementation of the present disclosure, the control module is configured to determine cut-off currents of the battery during different constant voltage charging stages respectively according to the present actual capacity of the battery.

According to yet another aspect of the present disclosure, a computer-readable storage medium having computer executable instructions stored thereon is provided. When the executable instructions are executed by a processor, any one of the above battery charging methods is implemented.

According to the battery charging method in the embodiments of the present disclosure, with measuring the capacity of the battery constantly, the present actual capacity of the battery may be obtained, and the charging current during the constant current charging stage may be constantly adjusted according to the actual capacity, which minimizes an aging and attenuation speed of the battery and improves a service life of the battery.

It is understandable that both the foregoing general description and the following detailed description are exemplary only and will not limit the disclosure.

### BRIEF DESCRIPTION OF THE DRAWINGS

By describing exemplary embodiments in detail with reference to the drawings, the above and other objectives, features and advantages of the present disclosure will become more obvious.
FIG 1 is a schematic diagram illustrating a system structure of a wireless charging system according to an exemplary embodiment.
FIG 2 is a schematic diagram illustrating a structure of another wireless charging system according to an exemplary embodiment.
FIG 3 is a schematic diagram illustrating a system structure of a wired charging system according to an exemplary embodiment.
FIG 4 is a schematic diagram illustrating a system structure of another wired charging system according to an exemplary embodiment.
FIG. 5 is a schematic diagram illustrating a system structure of yet another wired charging system according to an exemplary embodiment.
FIG. 6 is a flow chart illustrating a battery charging method according to an exemplary embodiment.
FIG. 7 is a flow chart illustrating another battery charging method according to an exemplary embodiment.
FIG. 8 is a block diagram illustrating a battery charging apparatus according to an exemplary embodiment.
FIG. 9 is a schematic diagram illustrating a computer-readable storage medium according to an exemplary embodiment.

### DETAILED DESCRIPTION

The exemplary implementations will now be described more comprehensively with reference to the attached drawings. However, the exemplary embodiments may be implemented in various forms, and should not be understood as examples limited to the description herein; on the contrary, providing these embodiments makes the present disclosure more comprehensive and complete, and fully conveys the concept of the exemplary embodiments to those skilled in the art. The drawings are only schematic illustrations of the present disclosure, and are not necessarily drawn proportionally. The same reference signs in the drawings represent the same or similar parts, and thus repeated description will be omitted.

In addition, features, structures, or characteristics described herein may be combined in one or a plurality of implementations in any suitable manner. In the following description, many specific details are provided to give a sufficient understanding of the implementations of the present disclosure. However, those skilled in the art will realize that the technical solution of the present disclosure may be practiced without one or a plurality of the specific details, or other methods, components, apparatus, steps, and the like may be used. In other cases, well-known structures, methods, apparatus, implementations or operations are not illustrated or described in detail in order to avoid overwhelming the main content and to obscure all aspects of the present disclosure.

In the present disclosure, unless otherwise clearly regulations and limits, "connect", "connected" and other terms should be understood in a broad sense, for example, it may be permanent connection, removable connection, or integrated connection; it may be electrical connection, and it may also be mutual communication; and it may be direct connection or indirect connection through an intermediate medium. For those skilled in the art, the specific meaning of the above terms in the present disclosure may be understood according to specific circumstances.

In addition, in the description of the present disclosure, "a plurality of' means at least two, such as two, three, and the like, unless otherwise specified. "And/or" describes association relationships of associated objects, indicating that there may be three types of relationships, for example, A and/or B may represent three situations: A exists alone, B exists alone, and A and B exist at the same time. The character "/" generally indicates that the associated objects before and after are in an "or" relationship. The terms "first" and "second" are only used to describe purposes, and cannot be understood as indicating or implying relative importance or implicitly indicating the number of indicated technical features. Therefore, the features defined with "first" and "second" may explicitly or implicitly include at least one or a plurality of features.

First, a present mainstream constant-current constant-voltage (CCCV) charging method is described as follows.

A charging process of the battery may include: trickle charging stage (mode), constant current charging stage (mode), constant voltage charging stage (mode), and supplementary charging stage (mode).

In the trickle charging stage, pre-charging (that is, recovery charging) is firstly performed on a fully discharged battery. A current of trickle charging is usually one-tenth of a current of constant current charging. When the voltage of the battery rises above a voltage threshold of the trickle charging, a charging current will be increased to enter the constant current charging stage.

In the constant current charging stage, the battery is charged with a constant current, and the charging voltage rises rapidly. When the charging voltage reaches an expected charging voltage threshold of the battery, it will switch to the constant voltage charging stage. The constant current is usually a rated charging rate current, such as a large rate 3C current, and C is the capacity of the battery. Assuming that the capacity of the battery is 1700mAh, the constant current is 3^{∗}1700mA=5.1A.

In the constant voltage charging stage, the battery is charged with a constant voltage, and the charging current gradually decreases. When the charging current drops to a preset current threshold, the battery is fully charged. In the CCCV charging method, the current threshold is usually set to 0.01C, and C is the battery capacity. Still assuming that the capacity of the battery is 1700mAh, the current threshold is 0.01^{∗}1700mA=17mA.

After the battery is fully charged, some current loss will be generated due to an influence of self-discharging of the battery. At this time, it will enter the supplementary charging stage. In the supplementary charging stage, the charging current is very small just to ensure that the battery is at a full-charge condition.

It should be noted that the constant current charging stage does not require the charging current to remain completely constant. For example, it may generally mean that peaks or average values of the charging currents remain unchanged for a period of time. In practice, the constant current charging stage may be charged by a multi-stage constant current charging method.

The multi-stage constant current charging may have M constant current stages (M is an integer not less than 2), and the multi-stage constant current charging starts a first stage of charging with a predetermined charging current, and the M constant current stages of the multi-stage constant current charging are executed sequentially from the first stage to the M-th stage. After the constant current charging is switched from one constant current stage to the next constant current stage, the value of the current may be decreased. The constant current stage is switched from the present constant current stage to the next constant current stage when the voltage of the battery reaches a charge stop voltage threshold. The current conversion process between two adjacent constant current stages may be gradual or may be in a stepped skip manner.

A wireless charging system and a wired charging system in the related art are respectively introduced below.

In a wireless charging process, a power supply apparatus (such as an adapter) is generally connected to a wireless charging apparatus (such as a wireless charging base), and an output power of the power supply apparatus is wirelessly (such as electromagnetic signal or electromagnetic wave) transmitted to a device to be charged through the wireless charging apparatus to wirelessly charge the device to be charged.

According to different principles of wireless charging, wireless charging methods are mainly divided into three types: magnetic coupling (or electromagnetic induction), magnetic resonance, and radio wave. At present, mainstream wireless charging standards include QI standard, Power Matters Alliance (PMA) standard, and Alliance for Wireless Power (A4WP). The QI standard and the PMA standard both use the magnetic coupling for wireless charging. The A4WP standard uses the magnetic resonance for wireless charging.

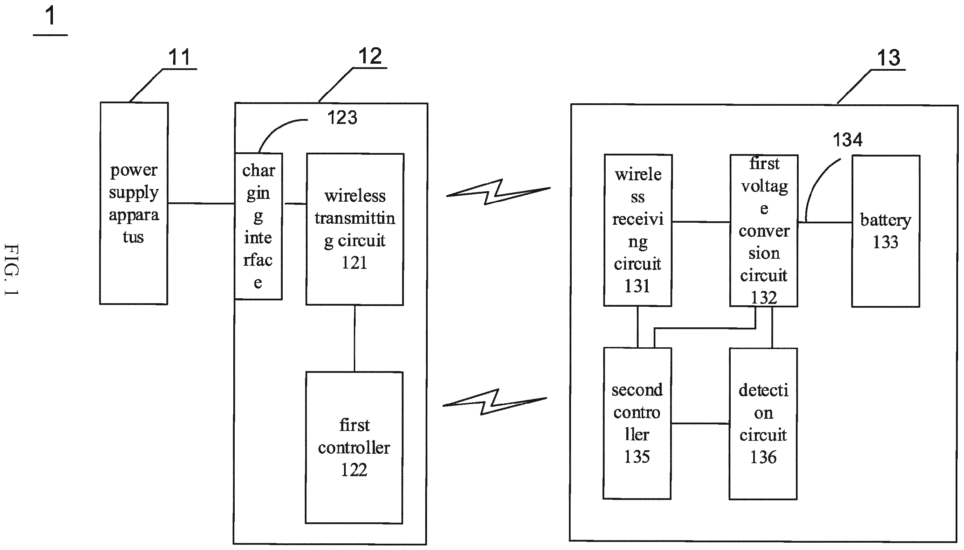

FIG. 1 is a schematic diagram illustrating a system structure of a wireless charging system according to an exemplary embodiment.

Referring to FIG. 1, a wireless charging system 1 includes a power supply apparatus 11, a wireless charging apparatus 12 and a device to be charged 13. The power supply apparatus 11 may be, for example, a power adapter, a power bank, and the like; the wireless charging apparatus 12 may be, for example, a wireless charging base; and the device to be charged 13 may be, for example, a terminal device.

After the power supply apparatus 11 is connected to the wireless charging apparatus 12, an output current of the power supply apparatus 11 is transmitted to the wireless charging apparatus 12.

The wireless charging apparatus 12 includes a wireless transmitting circuit 121 and a first control module 122.

The wireless transmitting circuit 121 is configured to convert electrical energy output by the power supply apparatus 11 into an electromagnetic signal (or electromagnetic wave) for transmission, so as to wirelessly charge the device to be charged 13. For example, the wireless transmitting circuit 121 may include a wireless transmitting drive circuit and a transmitting coil (or a transmitting antenna). The wireless transmitting drive circuit is configured to convert a direct current output by the power supply apparatus 11 into a high-frequency alternating current, and convert the high-frequency alternating current into the electromagnetic signal (or the electromagnetic wave) through the transmitting coil or the transmitting antenna and transmit the signal out.

The first control module 122 may be implemented by, for example, a micro control unit (MCU). The first control module 122 may be configured to perform wireless communication with the device to be charged 13 during a process of the wireless charging apparatus 12 wirelessly charging to the device to be charged 13. Specifically, the first control module 122 may perform wireless communication with a second control module 135 in the device to be charged 13.

In addition, the wireless charging apparatus 12 may further include a charging interface 123. The wireless transmitting circuit 121 is further configured to receive the electrical energy output by the power supply apparatus 11 through the charging interface 123, and generate the electromagnetic signal (or the electromagnetic wave) according to the electrical energy output by the power supply apparatus 11.

The charging interface 123 may be, for example, a USB 2.0 interface, a Micro USB interface, or a USB TYPE-C interface. In some embodiments, the charging interface 123 may also be a lightning interface, or any other type of parallel port or serial port that may be used for charging.

The wireless charging apparatus 12 may communicate with the power supply apparatus 11, for example, may communicate through the charging interface 123 without setting an additional communication interface or other wireless communication module, which may simplify implementations of the wireless charging apparatus 12. When the charging interface 123 is the USB interface, the wireless charging apparatus 12 (or the wireless transmitting circuit 121) and the power supply apparatus 13 may communicate based on data lines (such as D+ and/or D- lines) in the USB interface. When the charging interface 123 is a USB interface supporting Power Delivery (PD) communication protocol, such as the USB TYPE-C interface, the wireless charging apparatus 12 (or the wireless transmitting circuit 121) may communicate with the power supply apparatus 11 based on the PD communication protocol.

In addition, the wireless charging apparatus 12 may also be communicatively connected with the power supply apparatus 11 through other communication methods besides the charging interface 123. For example, the wireless charging apparatus 12 may communicate with the power supply apparatus 11 in a wireless manner, such as Near Field Communication (NFC).

The device to be charged 13 may be, for example, a terminal or a communication terminal. The terminal or communication terminal includes, but is not limited to, be set as an apparatus configured to receive/transmit communication signals via a wired line connection, such as via a public switched telephone network (PSTN) or a digital subscriber line (DSL), a digital cable, a direct cable connection, and/or another data connection/network and/or via, for example, a cellular network, a wireless local area network (WLAN), a digital TV network such as digital video broadcasting handheld (DVB-H) network, a satellite network, an amplitude modulation-frequency modulation (AM-FM) broadcast transmitter, and/or an wireless interface of another communication terminal. The communication terminal set to communicate through the wireless interface may be referred to as a "wireless communication terminal", a "wireless terminal" and/or a "mobile terminal". Examples of mobile terminals may include, but are not limited to satellite or cellular phones; personal communication system (PCS) terminals that combine cellular radio phones with data processing, fax, and data communication capabilities; may include Personal Digital Assistants (PDAs) including radio phones, pagers, and Internet/intranet accesses, Web browsers, memo pads, calendars, and/or global positioning system (GPS) receivers; and conventional laptop and/or handheld receivers or other electronic apparatuses including radio telephone transceivers. In addition, the terminals may also include, but not limited to, rechargeable electronic equipment such as electronic book readers, smart wearable devices, mobile power sources (such as power banks, travel chargers), electronic cigarettes, wireless mousses, wireless keyboards, wireless headsets, and Bluetooth speakers.

The device to be charged 13 includes a wireless receiving circuit 131, a battery 133, a first charging channel 134, a second control module 135 and a detection circuit 136.

The wireless receiving circuit 131 is configured to receive the electromagnetic signal (or electromagnetic wave) transmitted by the wireless transmitting circuit 121 and convert the electromagnetic signal (or electromagnetic wave) into the direct current output by the wireless receiving circuit 131. For example, the wireless receiving circuit 131 may include a receiving coil or a receiving antenna, and a waveshaping circuit such as a rectifier circuit and/or a filtering circuit connected to the receiving coil or the receiving antenna. The wireless receiving circuit 131 converts the electromagnetic signal (or electromagnetic wave) transmitted by the wireless transmitting circuit 121 into alternating current through a receiving coil or a receiving antenna, and operations such as rectification and/or filtering are performed on the alternating current through the waveshaping circuit, so as to convert the alternating current into a stable direct current to charge the battery 133.

It should be noted that the embodiments of the present disclosure do not specifically limit the specific form of the waveshaping circuit and the form of the output voltage and output current of the wireless receiving circuit 131 obtained after the waveshaping circuit is shaped.

In addition, in some embodiments, the device to be charged 13 may further include a first voltage conversion circuit 132. The first voltage conversion circuit 132 is provided on the first charging channel 134 (for example, a wire), and is provided between the wireless receiving circuit 131 and the battery 133. When the output voltage of the wireless receiving circuit 131 do not able to meet a requirement for an expected charging voltage of the battery 133, and/or the output current of the wireless receiving circuit 131 do not able to meet a requirement for an expected charging current of the battery 133, conversion may be performed through the first voltage conversion circuit 132, to obtain the expected charging voltage and/or charging current of the battery 133. For example, the output voltage and output current of the wireless receiving circuit 131 are input into the first voltage conversion circuit 132 through the first charging channel 134; after the first voltage conversion circuit 132 converts the input voltage, the output voltage and current are loaded on both ends of the battery 133 through the first charging channel 134 to meet the requirements for the expected charging voltage and/or charging current of the battery 133.

The battery 133 may include a single-cell or a plurality of cells. When the battery 133 includes the plurality of cells, the plurality of cells may be connected in series. As a result, a charging voltage that the battery 133 may withstand is a sum of charging voltages that the plurality of cells may withstand, which may increase a charging speed and reduce charging heat.

For example, taking the device to be charged 13 as a mobile phone as an example, when the battery 133 of the device to be charged 13 includes the single cell, a voltage of the internal single cell is generally between 3.0V and 4.35V When the battery 133 of the device to be charged 13 includes two cells connected in series, a total voltage of the two cells connected in series is 6.0V-8.7V Therefore, compared with the single cell, when the plurality of cells are connected in series, the output voltage of the wireless receiving circuit 131 may increase. Compared with the single cell, a charging current required by the plurality of cells is about 1/N of a charging current required by the single cell (N is the number of interconnected cells in the device to be charged 13) in a case of reaching a same charging speed. In other words, under a premise of ensuring the same charging speed (same charging power), the solution of adopting the plurality of cells may reduce the charging current, so as to reduce heat generated by the device to be charged 13 during the charging process. On the other hand, compared with the solution of the single cell, adopting the solution of adopting the plurality of cells may increase the charging voltage, and then increase the charging speed, under a condition that the charging current remains the same.

The second control module 135 may be implemented by, for example, an independent MCU, or may also be implemented by an application processor (AP) in the device to be charged 13. The second control module 135 is configured to communicate with the first control module 122 in the wireless charging apparatus 12, and a detected voltage value and/or current value on the first charging channel 134, a remaining capacity of the battery 133 or a preset full charging time and other information are fed back to the wireless charging apparatus 12, and error information and transmitting termination information may also be fed back to the first control module 122. In addition, the feedback information may also include adjustment instructions for a voltage and/or a current determined by the device to be charged 13 according to the detected voltage value and/or current value on the first charging channel 134, the remaining capacity, or the preset full time charging, and other information.

The detection circuit 136 is configured to detect the voltage value and/or current value on the first charging channel 134. In some embodiments, when the device to be charged 13 is provided with the first voltage conversion circuit 132, the voltage value and/or current value on the first charging channel 134 may refer to as a voltage value and/or current value between the first voltage conversion circuit 132 and the battery 133, i.e., an output voltage and/or output current of the first voltage conversion circuit 132. The output voltage and/or output current is directly loaded to the battery 133 to charge the battery 133; or, the voltage value and/or current value on the first charging channel 134 may also refer to as a voltage value and/or current value between the wireless receiving circuit 131 and the first voltage conversion circuit 132, i.e., the output voltage value and/or current value of the wireless receiving circuit 131.

In some embodiments, the detection circuit 136 may include: a voltage detection circuit and a current detection circuit.

The voltage detection circuit is configured to sample the voltage on the first charging channel 134 and transmit the sampled voltage value to the second control module 135. The voltage detection circuit may, for example, sample the voltage on the first charging channel 134 in a series and voltage division manner.

The current detection circuit is configured to sample the current on the first charging channel 134 and transmit the sampled current value to the second control module 135. The current detection circuit may sample the current on the first charging channel 134 through, for example, a current sensing resistor and a galvanometer.

After receiving information fed back from the device to be charged 13 through the second control module 135, the first control module 122 may adjust a transmitting power of the wireless transmitting circuit 121 according to the voltage value and/or current value on the first charging channel 134, or according to adjustment instructions of the above voltage and/or current, so that the voltage and/or current of the direct current output by the first charging channel 134 matches the charging voltage and/or current required by the battery 133.

It should be understood that the above "matches the charging voltage and/or current required by the battery 133" includes: the voltage and/or current of the direct current output by the first charging channel 134 and the expected charging voltage and/or current of the battery 133 are equal or fluctuate within a preset range (for example, the fluctuation of the voltage value is between 100 mV to 200 mV).

Or, after receiving the information fed back from the device to be charged 13 through the second control module 135, the first control module 122 may adjust the transmitting power of the wireless transmitting circuit 121 according to the voltage value and/or current value on the first charging channel 134, or adjustment instructions of the above voltage and/or current, so that the voltage and/or current of the direct current output by the first charging channel 134 meets the charging requirements of the battery 133 during at least one charging stage of the trickle charging stage, the constant current charging stage and the constant voltage charging stage.

In addition, as described above, the second control module 135 may also transmit battery status information to the first control module 122. The battery status information includes a current electricity quantity and/or a current voltage of the battery 133 in the device to be charged 13. After receiving the battery status information, the first control module 122 may first determine the charging stage where the battery 133 presently is according to the battery status information, and then determine a target output voltage value and/or a target charging current matching the charging stage where the battery 133 presently is. Then, the first control module 122 may compare the output voltage and/or output current of the first charging channel 134 transmitted by the second control module 135 with the target output voltage value and/or the target charging current of the determined charging stage where the battery 133 presently is so as to determine whether the output voltage and/or output current of the first charging channel 134 matches the determined t charging stage where the battery 133 presently is. In response to not matching, the transmitting power of the wireless transmitting circuit 121 is adjusted until the fed back output voltage and/or output current of the first charging channel 134 matches the charging stage where the battery 133 presently is.

In addition, as described above, the second control module 135 may directly feed back the detected output voltage and/or output current of the first charging channel 134, as well as the adjustment instructions determined according to the detected output voltage and/or output current of the first charging channel 134 to the first control module 122. The adjustment instructions may be, for example, instructions of increasing or decreasing the transmitting power of the wireless transmitting circuit 121. Or, the wireless charging apparatus 12 may also set a plurality of levels of the transmitting power for the wireless transmitting circuit 121, and the first control module 122 adjusts the transmitting power of the wireless transmitting circuit 121 by one level each time the first control module 121 receives the adjustment instruction until the feedback output voltage and/or output current of the first charging channel 134 matches the charging stage where the battery 133 presently is.

The present disclosure does not limit the communication mode and communication sequence between the wireless charging apparatus 12 and the device to be charged 13 (or the first control module 122 and the second control module 135).

In some embodiments, the wireless communication between the wireless charging apparatus 12 and the device to be charged 13 (or the first control module 122 and the second control module 135) may be a one-way wireless communication. In the wireless charging process of the battery 133, taking the device to be charged 13 as an initiator of communication and the wireless charging device 12 as a receiver of communication as an example, for example, in the constant current charging stage of the battery, the device to be charged 13 may detect the charging current of the battery 133 in real time through the detection circuit 136 (i.e., the output current of the first charging channel 134). When the charging current of the battery 133 does not match the current charging stage, the device to be charged 13 transmits feedback information or adjustment information to the wireless charging apparatus 12 to instruct the wireless charging apparatus 12 to adjust the transmitting power of the wireless transmitting circuit 121.

In some embodiments, the wireless communication between the wireless charging apparatus 12 and the device to be charged 13 (or the first control module 122 and the second control module 135) may be a two-way wireless communication. The two-way wireless communication generally requires the receiver to send response information to the initiator after receiving a communication request initiated by the initiator. The bidirectional communication mechanism may make the communication process more secure. In a process of the two-way wireless communication, either of the wireless charging apparatus 12 and the device to be charged 13 may act as a master device party to initiate a bidirectional communication session. Correspondingly, the other party may act as a slave device party to make a first response or a first reply to the communication initiated by the master device party, and further, the master device party makes a targeted second response after receiving the first response or the first reply, thereby completing a communication negotiation process between the master device party and the slave device party.

The master device party making the targeted second response after receiving the first response or the first reply includes: not receiving, by the master device party, the first response or the first reply from the slave device party with respect to the communication session within a preset time, and making, by the master device party, the targeted second response to the first response or the first reply of the slave device party.

In addition, after the slave device party makes the first response or the first reply to the communication session initiated by the master device party, there is no requirement for the master device party to make the targeted second response to the first response or the first reply from the slave device party, it may be considered that one communication negotiation process is completed between the master device party and the slave device party

During the communication process between the wireless charging apparatus 12 and the device to be charged 13, the second control module 135 in the device to be charged 13 may couple the feedback information to the receiving coil of the wireless receiving circuit 131 and transmit the coupled feedback information to the first control module 122 of the wireless charging apparatus 12.

Or, the device to be charged 13 may also communicate with the wireless charging apparatus 12 via at least one of communication manners such as Bluetooth, Wi-Fi, mobile cellular network (such as 2G 3G, 4G or 5G), wireless communication (such as IEEE 802.11, 802.15 (WPANs), 802.16 (WiMAX), 802. 20 and the like), near field communication based on a high-frequency antenna (such as 60GHz), optical communication (such as infrared communication), ultrasonic communication, and ultra-wideband (UMB) communication so as to transmit the above feedback information to the wireless charging apparatus 12. It is understandable that when communicating through the above communication method, the device to be charged 13 and the wireless charging apparatus 12 also include corresponding communication modules, such as at least one of a Bluetooth communication module, a Wi-Fi communication module, a 2G/3G/4G/5G mobile communication module, a high-frequency antenna, an optical communication module, an ultrasonic communication module, and an ultra-wideband communication module, and the like. It should be understood that standards that the above wireless communication may adopt include past and existing standards, and, without departing from the scope of the present disclosure, as well as include future versions and future standards that adopt these standards. By communicating through the above wireless communication manners, reliability of the communication may be improved, thus safety of charging may be improved. Compared with a method that the feedback information is coupled to the receiving coil of the wireless receiving circuit 131 for communication through a signal modulation manner in the related art (for example, the Qi standard), the reliability of communication may be improved, and voltage ripple brought by adopting the signal coupling communication method may be avoided, which affects the voltage processing process of the first voltage conversion circuit 132 of the device to be charged 13. In addition, for the voltage ripple generated when the wireless receiving coil is output, safety problems of wireless charging may be caused due to not effectively processing the ripple, and there are certain safety risks. The voltage ripple may be eliminated by communicating through the above wireless communication method. Thus, a circuit for processing the voltage ripple may be omitted, complexity of the charging circuit of the device to be charged 13 may be reduced, charging efficiency may be improved, circuit setting space may be saved, and cost may be reduced.

The power supply apparatus 11 may be a power supply apparatus with a fixed output power, or a power supply apparatus with an adjustable output power. The power supply apparatus with the adjustable output power may be provided with a voltage feedback loop and a current feedback loop inside, so that its output voltage and/or output current may be adjusted according to actual requirements.

As described above, the wireless charging apparatus 12 may continuously adjust the transmitting power of the wireless transmitting circuit 121 during the charging process, so that the output voltage and/or output current of the first charging channel 134 matches the charging stage where the battery 133 presently is.

In some embodiments, the first control module 122 may adjust a power quantity drawn by the wireless transmitting circuit 121 from the maximum output power provided by the power supply apparatus 11, thereby adjusting the transmitting power of the wireless transmitting circuit 121. In other words, adjusting the transmitting power of the wireless transmitting circuit 121 is controlled by the first control module 122, and the first control module 122 may adjust the transmitting power of the wireless transmitting circuit 121 by adjusting the power quantity drawn from the maximum output power after receiving the feedback information of the device to be charged 13 so as to adjust, which has the advantages of fast adjustment speed and high efficiency.

For example, a power adjustment circuit may be provided in the first control module 122, in the wireless transmitting circuit 121, or between the first control module 122 and the wireless transmitting circuit 121. The power adjustment circuit may include, for example, a pulse width modulation (PWM) controller and a switching unit. The first control module 122 may adjust the transmitting power of the wireless transmitting circuit 121 by adjusting a duty cycle of a control signal output by the PWM controller, and/or by controlling a switching frequency of the switching unit.

Or, in other embodiments, the first control module 122 may perform communication with the power supply apparatus 11 to adjust the output voltage and/or output current of the power supply apparatus 11, thereby adjusting the transmitting power of the wireless transmitting circuit 121. In other words, t adjusting the transmitting power of the wireless transmitting circuit 121 is controlled by the power supply apparatus 11, which adjusts the transmitting power of the wireless transmitting circuit 121 by changing the output voltage and/or output current. This way of adjusting the transmitting power is advantageous in that, the power supply apparatus 11 may provide as much power as the wireless charging apparatus 12 needs, thus avoiding waste of power.

It should be understood that, similar to the communication manner between the wireless charging apparatus 12 and the device to be charged 13, the communication between the wireless charging apparatus 12 (or the first control module 122) and the power supply apparatus 11 may be one-way communication, or bidirectional communication, which is not specifically limited in the present disclosure.

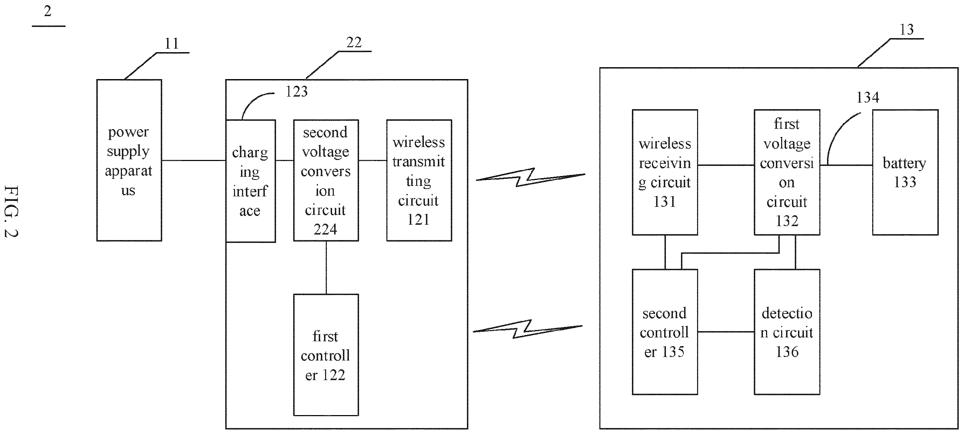

FIG. 2 is a schematic diagram illustrating a structure of another wireless charging system according to an exemplary embodiment.

Referring to FIG. 2, a difference from the wireless charging system 1 illustrated in FIG. 1 is that the wireless charging apparatus 22 in the wireless charging system 2 further includes a second voltage conversion circuit 224. The second voltage conversion circuit 224 is provided between the charging interface 123 and the wireless transmitting circuit 121, and may be configured to receive the output voltage and output current of the power supply apparatus 11. The wireless transmitting circuit 121 is configured to generate the electromagnetic signals (or electromagnetic waves) based on the voltage and current converted by the second voltage conversion circuit 224.

Adjusting the transmitting power of the wireless transmitting circuit 121 by the first control module 122 may include: adjusting, by the first control module 122, the voltage and/or current converted by the second voltage conversion circuit 224 to adjust the transmitting power of the wireless transmitting circuit 121.

When the power supply apparatus 11 is the power supply apparatus with the fixed output power, the first control module may adjust the output voltage and/or output current of the second voltage conversion circuit 224, thereby adjusting the transmitting power of the wireless transmitting circuit 121, so that versatility of the wireless charging apparatus 22 is improved to applied to the existing ordinary power supply apparatus 11. The second voltage conversion circuit 224 may include, for example, a PWM controller and a switching unit. The first control module may adjust the output voltage and/or output current of the circuit 224 by adjusting the duty cycle of the control signal output by the PWM controller, and/or controlling the switching frequency of the switching unit, so as to adjust the transmitting power of the wireless transmitting circuit 121.

Alternatively, in some embodiments, the second voltage conversion circuit 224 may receive the output voltage and output current of the power supply apparatus 11 through the charging interface 123. For example, when the power supply apparatus 11 is a normal power supply apparatus, the wireless charging apparatus 22 is connected to the normal power supply apparatus through the charging interface 123. During the wireless charging, the first control module 122 may control the second voltage conversion circuit 224 to operate, and adjust the output voltage and/or output current of the second voltage conversion circuit 224 according to the feedback information of the device to be charged 13, so that the transmitting power of the wireless transmitting circuit 121 meets the current charging requirements of the battery 133. This adjustment method also is that, adjusting the transmitting power of the wireless transmitting circuit 121 is controlled by the first control module 122. The first control module 122 may immediately adjust the transmitting power of the wireless transmitting circuit 121 once receiving the feedback information of the device to be charged 13, which has the advantages of fast adjustment speed and high efficiency.

It should also be understood that the output current of the power supply apparatus 11 may be constant direct current, pulsating direct current or alternating current, which is not specifically limited in the present disclosure.

The above description is based on the example that the wireless charging apparatus 12 or 22 is connected to the power supply apparatus 11, and the power is obtained from the power supply apparatus 11. However, the present disclosure is not limited to this. The wireless charging apparatus 12 or 22 may also integrate an adapter-like function inside, so as to directly convert the external alternating current (such as mains electricity) into the above electromagnetic signal (or electromagnetic wave). For example, the adapter-like function may be integrated in the wireless transmitting circuit 121 of the wireless charging apparatus 12 or 22, for example, a rectifier circuit, a primary filter circuit, and/or a transformer may be integrated in the wireless transmitting circuit 121. In this way, the wireless transmitting circuit 121 may be configured to receive alternating current from external input (such as 220V alternating current, or mains electricity), and generate the electromagnetic signal (or electromagnetic wave) based on the alternating current. Integrating the adapter-like functions in the wireless charging apparatus 12 or 22 may cause the wireless charging apparatus 12 or 22 not requiring to obtain power from the external power supply apparatus, which may improve integration of the wireless charging apparatus 12 or 22 and reduces the number of elements required for realizing the charging process.

In addition, the above power supply apparatus 11 includes a fast charging power supply apparatus and a normal power supply apparatus. The maximum output power provided by the fast charging power supply apparatus is greater than or equal to a preset value. The maximum output power provided by the normal power supply apparatus is less than the preset value. It should be understood that, in the embodiments of the present disclosure, the fast charging power supply apparatus and the normal power supply apparatus are merely classified according to the maximum output power, and no other characteristics of the power supply apparatus are distinguished. In other words, a fast charging type and a normal charging type may be equivalent to a first type and a second type. For example, a power supply apparatus having a maximum output power greater than or equal to 20W may be classified as a fast charging power supply apparatus, and the power supply apparatus having a maximum output power less than 20W may be classified as the normal power supply apparatus.

Correspondingly, the wireless charging apparatus 12 or 22 may support a first wireless charging mode and a second wireless charging mode. The charging speed at which the wireless charging apparatus 12 or 22 charges the device to be charged 13 in the first wireless charging mode is faster than the charging speed at which the wireless charging apparatus 12 or 22 charges the device to be charged 13 in the second wireless charging mode. In other words, compared to the wireless charging apparatus 12 or 22 operating in the second wireless charging mode, the wireless charging apparatus 12 or 22 operating in the first wireless charging mode takes less time to charge the battery in the device to be charged 13 with the same capacity.

The first wireless charging mode may be a fast wireless charging mode. The fast wireless charging mode may refer to as a wireless charging mode in which the transmitting power of the wireless charging apparatus 12 or 22 is relatively higher (usually greater than or equal to 15W).

The second wireless charging mode may be a normal wireless charging mode, which may refer to as a wireless charging method in which the transmitting power of the wireless charging apparatus 12 or 22 is relatively smaller (usually less than 15W, and a transmitting power generally is 5W or 10W). For example, the normal wireless charging mode may be a traditional wireless charging mode based on the QI standard, the PMA standard or the A4WP standard.

In the normal wireless charging mode, it usually takes several hours to fully charge a battery having large-capacity (such as a battery having a capacity of 3000 mAh), while in the fast wireless charging mode, due to the faster charging speed, the charging time required to fully charge the battery having the same capacity may be significantly shortened.

In some embodiments, the first control module 122 may perform the bidirectional communication with the second control module 135 to control the transmitting power of the wireless transmitting circuit 121 in the first wireless charging mode.

In some embodiments, the first control module 122 may perform the bidirectional communication with the second control module 135 to control the transmitting power of the wireless transmitting circuit 121 in the first wireless charging mode as follows. The first control module 122 performs the bidirectional communication with the second control module 135 to negotiate a wireless charging mode between the wireless charging apparatus 12 or 22 and the device to be charged 13.

For example, the first control module 122 may perform handshake communication with the second control module 135, control the wireless charging apparatus 12 or 22 to charge the device to be charged 13 in the first wireless charging mode when the handshake communication succeeds, and control the wireless charging device 12 or 22 to charge the device to be charged 13 in the second wireless charging mode when the handshake communication fails.

The handshake communication may refer to recognize the other's identity by any of the communication parties. When the handshake communication succeeds, it may indicate that the wireless charging apparatus 12 or 22 and the device to be charged 13 both support a wireless charging mode with adjustable transmitting power. When the handshake communication fails, it indicates that at least one of the wireless charging apparatus 12 or 22 and the device to be charged 13 does not support a wireless charging mode with adjustable transmitting power.

In the present disclosure, the wireless charging apparatus 12 or 22 does not blindly perform fast wireless charging on the device to be charged 13 in the first wireless charging mode, but performs the bidirectional communication with the device to be charged 13 to negotiate whether the wireless charging apparatus 12 or 22 may perform the fast wireless charging on the device to be charged 13 in the first wireless charging mode, which may improve safety of the charging process.

In some embodiments, the first control module 122 performs the bidirectional communication with the second control module 135 to negotiate the wireless charging mode between the wireless charging apparatus 12 or 22 and the device to be charged 13 as follows. For example: the first control module 122 sends a first instruction to the second control module 135, in which the first instruction is configured to query the device to be charged 13 whether to operate in the first wireless charging mode. The first control module 122 receives a reply instruction of the first instruction sent by the second control module 135, in which the reply instruction is configured to indicate whether the device to be charged 13 agrees to operate in the first wireless charging mode. When the device to be charged 13 agrees to operate in the first wireless charging mode, the first control module controls the wireless charging apparatus 12 or 22 to charge the device to be charged 13 in the first wireless charging mode.

In addition to determining the wireless charging mode based on communication negotiation, the first control module 122 may also select or switch the wireless charging mode according to some other factors. For example, the first control module 122 may also control the wireless charging apparatus 12 or 22 to charge the battery 133 in the first wireless charging mode or the second wireless charging mode according to the temperature of the battery 133. For example, when the temperature is less than a preset low temperature threshold (such as 5°C or 10°C), the first control module 122 may control the wireless charging apparatus 12 or 22 to perform the normal charging in the second wireless charging mode. When the temperature is greater than or equal to the preset low temperature threshold, the first control module 122 may control the wireless charging apparatus 12 or 22 to perform the fast charging in the first wireless charging mode. Further, when the temperature is higher than a high temperature threshold (for example, 50°C), the first control module 122 may control the wireless charging apparatus 12 or 22 to stop charging.

Before introducing the wired charging system, a "normal charging mode" and a "fast charging mode" in the wired charging system are firstly explained. The normal charging mode means that the adapter outputs a relatively small current value (usually less than 2.5A) or charge the battery in the device to be charged with a relatively smaller power (usually less than 15W). In the normal charging mode, it usually takes several hours to fully charge a battery having a larger-capacity (such as a battery having a capacity of 3000 mAh). The fast charging mode means that the adapter is able to output a relatively high current (usually greater than 2.5A, such as 4.5A, 5A or even higher) or charges the battery in the device to be charged with a relatively higher power (usually greater than or equal to 15W). Compared with the normal charging mode, the charging speed of the adapter in the fast charging mode is faster, and the charging time required to fully charge the battery having the same capacity may be significantly shortened.

In the process of the wired charging, the power supply apparatus (such as the adapter) is generally connected to the device to be charged through a cable, and the power provided by the power supply apparatus is transmitted to the device to be charged through the cable to charge the device to be charged.

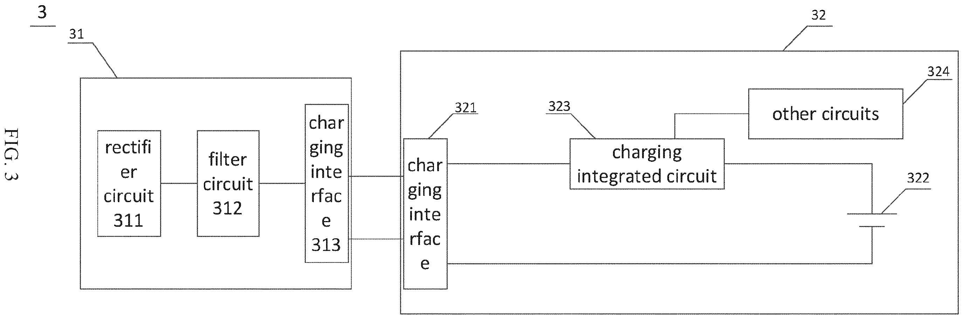

FIG. 3 is a schematic diagram illustrating a system structure of a wired charging system according to an exemplary embodiment.

Referring to FIG. 3, the wired charging system 3 includes a power supply apparatus 31 and a device to be charged 32. The power supply apparatus 31 may be, for example, a power adapter, a power bank, and the like. The device to be charged 32 may be, for example, a terminal device.

The device to be charged 32 may be charged by a power supply apparatus 31 of 10W (5V/2A), that is, the power supply apparatus 31 charge the device to be charged 32 in the above normal charging mode.

The power supply apparatus 31 includes a rectifier circuit 311, a filter circuit 312, and a charging interface 313.

The rectifier circuit 311 is configured to convert input alternating current into direct current, and the filter circuit 312 is configured to filter the direct current output by the rectifier circuit 311 to provide stable direct current to the device to be charged 32 connected to the power supply apparatus 31 via the charging interface 313.

The device to be charged 32 includes a charging interface 321, a battery unit 322 and a charging integrated circuit (IC) 323.

The device to be charged 32 receives the electrical energy provided by the power supply apparatus 31 through the charging interface 321. The charging interface 321 may be, for example, a USB 2.0 interface, a Micro USB interface, or a USB TYPE-C interface. In some embodiments, the charging interface 123 may also be a lightning interface, or any other type of parallel port or serial port that may be used for charging. The battery unit 322 includes, for example, a single lithium cell. The charging cut-off voltage of the single cell is generally 4.2V, therefore, a charging integrated circuit 323 requires to be configured to convert a 5V voltage into an expected charging voltage of the battery unit 322.

In addition, the charging integrated circuit 323 may also be configured as a conversion circuit to control the charging voltage and/or the charging current of the battery unit 322 during the above different charging stages. For example, in the constant current charging stage, the conversion circuit may make current entering the battery meet an expected first charging current of the battery through a current feedback loop. In the constant voltage charging stage, the conversion circuit may make voltage applicable to both ends of the battery unit 322 meet an expected charging voltage of the battery through a voltage feedback loop. In the trickle charging stage, the conversion circuit may make the current entering the battery meet an expected second charging current of the battery (the second charging current is less than the first charging current) through the current feedback loop.

The charging integrated circuit 323 may also obtain battery capacity information of the battery unit 322 to adjust the charging voltage and/or charging current loaded on both ends of the battery unit 322 according to the battery capacity information of the battery unit 322. For example, the charging integrated circuit 323 may measure the charging voltage and/or charging current through a voltameter.

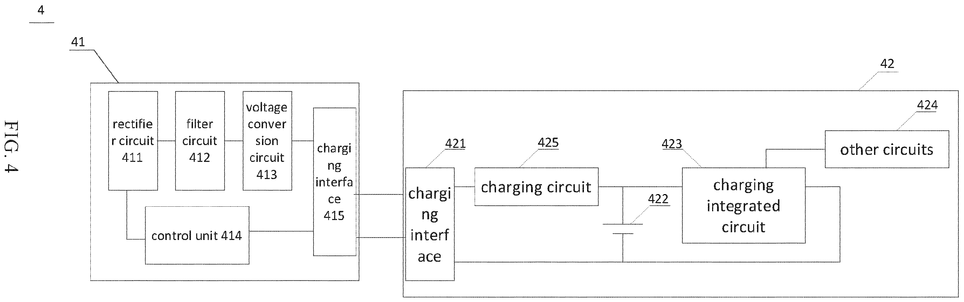

FIG. 4 is a schematic diagram illustrating a system structure of another wired charging system according to an exemplary embodiment.

Referring to FIG. 4, the wired charging system 4 includes a power supply apparatus 41 and a device to be charged 42. The power supply apparatus 41 may be, for example, a power adapter, a power bank, and the like. The device to be charged 42 may be, for example, a terminal device.

The device to be charged 42 may be quickly charged by a power supply apparatus 41 having a high-power of 20W (5V/4A), that is, the power supply apparatus 41 charges the device to be charged 42 in the above fast charging mode.

The power supply apparatus 41 includes a rectifier circuit 411, a filter circuit 412, a voltage conversion circuit 413, a first control unit 414, and a charging interface 415.

The rectifier circuit 411 is configured to convert input alternating current into direct current. The filter circuit 412 is configured to filter direct current output by the rectifier circuit 411 to provide stable direct current. The voltage conversion circuit 413 is configured to perform voltage conversion on the direct current output by the filter circuit 412, and is usually a buck circuit, to provide the direct current with a suitable voltage to the device to be charged 42 connected to the voltage conversion circuit 413 through the charging interface 415. The first control unit 414 is configured to receive feedback from the device to be charged 42 to control the voltage and/or current of the direct current output by the rectifier circuit 411. In addition, the first control unit 414 is also configured to control the charging voltage and/or charging current of the battery unit 422 of the device to be charged 42 in the above different charging stages (for example, the constant current charging stage, the constant voltage charging stage, and the like).

In some embodiments, the power supply apparatus 41 may also provide pulsating direct current to charge the device to be charged 42. The power supply apparatus 41 outputs the pulsating direct current, for example, the above filter circuit 412 may be removed, to enable the unfiltered current output by the rectifier circuit 411 to directly charge the device to be charged 42 through the voltage conversion circuit 413 and the charging interface 415. Or, an electrolytic capacitor included in the above filter circuit 412 may be removed to realize the output of the pulsating direct current.

The device to be charged 42 includes a charging interface 421, a battery unit 422, a second control unit 423, a detection circuit 424 and a charging circuit 425.

The charging circuit 425 is connected to the charging interface 421 and the battery unit 422 for charging the battery unit 422. The charging interface 421 may be, for example, a USB 2.0 interface, a Micro USB interface, or a USB TYPE-C interface. In some embodiments, the charging interface 421 may also be a lightning interface, or any other type of parallel port or serial port that may be used for charging.

For the battery unit 422, a lithium battery including a single lithium cell is still taken as an example. Since there is the voltage conversion circuit 413 in the power supply apparatus 41, the voltage output by the power supply apparatus 41 may be directly loaded to both ends of the battery unit 422. Therefore, the charging circuit 425 may charge the battery unit 422 in a manner of direct charging, and electricity energy output by the power supply apparatus 41 is directly provided to the battery unit 422 for charging the battery without voltage conversion after passing through the charging circuit 425. Alternatively, the charging circuit 425 may be a switching circuit, and the current output by the power supply apparatus 41 has a little change of voltage drop after passing through the charging circuit 425, which will not substantially affect the charging process of the battery unit 422.

The detection circuit 424 is configured to detect the voltage value and/or current value between the charging circuit 425 and the battery unit 422, namely, the output voltage and/or output current of the charging circuit 425. And the output voltage and/or output current are directly loaded on the battery unit 422 to charge the battery unit 422. In addition, the detection circuit 424 may also include a voltameter for detecting the capacity of the battery unit 422.

The second control unit 423 communicates with the power supply apparatus 41 to transmit the voltage value and/or current value loaded on the battery unit 422 detected by the detection circuit 424 and the battery capacity information of the battery unit 422 and the like to the power supply apparatus 41. The second control unit 423 may, for example, communicate with the power supply apparatus 41 through the charging interface 421 without an additional communication interface or other wireless communication module. When the charging interface 421 is the USB interface, the second control unit 423 and the power supply apparatus 41 may communicate based on data lines (such as D+ and/or D- lines) in the USB interface. For another example, the charging interface 421 is a USB interface (such as the USB TYPE-C interface) supporting a power deliver (PD) communication protocol, and the second control unit 423 may communicate with the power supply apparatus 41 based on the PD communication protocol. In addition, the second control unit 423 may also be communicatively connected with the power supply apparatus 41 through other communication manners besides the charging interface 421. For example, the second control unit 423 may communicate with the power supply apparatus 11 in a wireless manner, such as NFC.

For the device to be charged including the single cell, when charging the single cell in a larger charging current, a heating phenomenon of the device to be charged is more serious. In order to ensure the charging speed of the device to be charged and alleviate the heating phenomenon of the device to be charged during the charging process, a structure of the battery may be modified by using a plurality of cells connected in series and performing directly charging on the plurality of cells, that is, directly loading the voltage output by the adapter to the both ends of the battery unit including the plurality of cells. Compared with the solution having the single cell (that is, the capacity of the single cell before performing an improvement is the same as the total capacity of the plurality of cells connected in series after performing the improvement), for achieving the same charging speed, the charging current required by the plurality of cells is about 1/N of the charging current required by the single cell (N is the number of the cells connected in series). In other words, under a premise of ensuring the same charging speed, the plurality of cells connected in series may greatly reduce the charging current, thereby further reducing the heat generated by the device to be charged during the charging process.

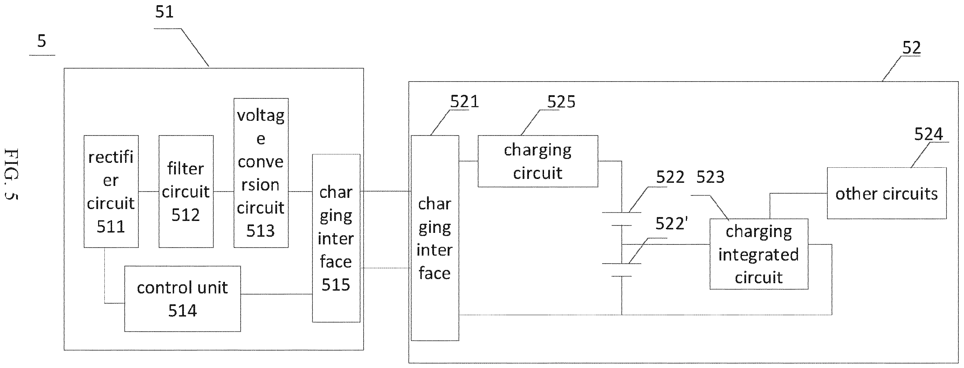

FIG. 5 is a schematic diagram illustrating a system structure of yet another wired charging system according to an exemplary embodiment. Referring to FIG. 5, the wired charging system 5 includes a power supply apparatus 51 and a device to be charged 52. The power supply apparatus 51 may be, for example, a power adapter, a power bank, and the like; and the device to be charged 52 may be, for example, a terminal device.

The device to be charged 52 may be quickly charged by a power supply apparatus 51 having a high power of 50W (10V/5A), that is, the power supply apparatus 51 charges the device to be charged 52 in the above fast charging mode.

The power supply apparatus 51 includes a rectifier circuit 511, a filter circuit 512, a voltage conversion circuit 513, a first control unit 514, and a charging interface 515.

The rectifier circuit 511 is configured to convert input alternating current into direct current. The filter circuit 512 is configured to filter the direct current output by the rectifier circuit 511 to provide stable direct current. The voltage conversion circuit 513 is configured to perform voltage conversion on the direct current output by the filter circuit 512 to provide the direct current with a suitable voltage to the device to be charged 52 through the charging interface 515. The first control unit 514 is configured to receive feedback from the device to be charged 52 to control the voltage and/or current of the direct current output by the rectifier circuit 511. In addition, the first control unit 514 is also configured to control the charging voltage and/or charging current of the first battery unit 522 and the second battery unit 522' of the device to be charged 52 in the above different charging stages (for example, the constant current charging stage, the constant voltage charging stage, and the like).

In some embodiments, the power supply apparatus 51 may also provide pulsating direct current to charge the device to be charged 52. The power supply apparatus 51 outputs the pulsating direct current, for example, the above filter circuit 512 may be removed, so that the unfiltered current output by the rectifier circuit 511 directly charges the device to be charged 52 after passing through the voltage conversion circuit 513 and the charging interface 515. Or, an electrolytic capacitor included in the above filter circuit 512 may be removed to realize the output of the pulsating direct current.

The device to be charged 52 includes a charging interface 521, a first battery unit 522, a second battery unit 522', a second control unit 523, a detection circuit 524 and a charging circuit 525.

The charging interface 521 may be, for example, a USB 2.0 interface, a Micro USB interface, or a USB TYPE-C interface. In some embodiments, the charging interface 521 may also be a lightning interface, or any other type of parallel port or serial port that may be used for charging.

The first battery unit 522 and the second battery unit 522' are connected in series. The first battery unit 522 and the second battery unit 522' are, for example, lithium batteries each including a single cell. The charging circuit 525 is connected to the first battery unit 522 and the second battery unit 522' connected in series and the charging interface 521 for charging the first battery unit 522 and the second battery unit 522'. The voltage output by the power supply apparatus 51 may be directly loaded to both ends of the first battery unit 522 and the second battery unit 522' connected in series, that is, the charging circuit 35 charges the first battery unit 522 and the second battery unit 522' connected in series in a manner of direct charging. It should be noted that since the charging circuit 525 charges the first battery unit 522 and the second battery unit 522' connected in series in a manner of direct charging, and line impedance will cause a voltage drop in a charging circuit, the output voltage output by the power supply apparatus 51 and received by the charging circuit 525 requires to be greater than a total voltage of a plurality of cells included in the first battery unit 522 and the second battery unit 522'. An operating voltage of a single cell is generally between 3.0V to 4.35V Taking two cells connected in series as an example, the output voltage of the power supply apparatus 51 may be set to be greater than or equal to 10V

The detection circuit 524 is configured to detect the voltage value and/or current value between the charging circuit 525 and the first battery unit 522, the second battery unit 522', that is, the output voltage and/or output current of the charging circuit 525, and the output voltage and/or the output current is directly loaded on the first battery unit 522 and the second battery unit 522' to charge the first battery unit 522 and the second battery unit 522'. In addition, the detection circuit 524 may also include a voltameter for detecting the capacity of the first battery unit 522 and the second battery unit 522'.

The second control unit 523 communicates with the power supply apparatus 51 to transmit the voltage value and/or current value loaded on the first battery unit 522 and the second battery unit 522' and detected by the detection circuit 524, and the battery capacity information of the first battery unit 522 and of the second battery unit 522', and the like to the power supply apparatus 51. The second control unit 523 may, for example, communicate with the power supply apparatus 51 through the charging interface 521 without setting an additional communication interface or other wireless communication modules. When the charging interface 521 is the USB interface, the second control unit 523 may communicate with the power supply apparatus 51 based on data lines (such as D+ and/or D- lines) in the USB interface. For another example, the charging interface 521 is a USB interface (such as a USB TYPE-C interface) supporting a power deliver (PD) communication protocol, and the second control unit 523 may communicate with the power supply apparatus 51 based on the PD communication protocol. In addition, the second control unit 523 may also be communicatively connected with the power supply apparatus 51 through other communication methods besides the charging interface 521. For example, the second control unit 523 may communicate with the power supply apparatus 51 in a wireless manner, such as NFC.

It should be noted that the block diagrams illustrated in the above drawings are functional entities and do not necessarily correspond to physically or logically independent entities. These functional entities may be implemented in the form of software, or implemented in one or more hardware modules or integrated circuits, or implemented in different networks and/or processor devices and/or microcontroller devices.

For the present constant-current constant-voltage charging method, in the constant current charging stage, the current of the constant current charging is determined according to an initial capacity (a rated capacity) of the battery. However, as cycle charging and discharging is performed, the capacity of the battery will decrease. When the charging continues with the current of the constant current charging calculated according to the initially rated capacity of the battery, the charging current will exceed a preset optimal current at the beginning. Taking the charging rate of 3C current as an example, assuming that a rated capacity of the battery is 1700mAh, the initially calculated current of the constant current charging is 3^{∗}1700mA=5.1A. When the battery is used by cycling for hundreds of times, the capacity of the battery will drop to approximately 80% of the initial capacity, that is, 1700mAh^{∗}0.8=1360mAh. At this time when the charging is still performed with the 5.1A current of the constant current charging, the charging rate will be increased to 3.7C, which will exceed an optimal using rate that the battery system designs. Using in the ultra-rate will accelerate the aging of internal materials of the battery system, and may also accelerate accumulation of lithium ions (Li+) on a surface of a cathode, further increasing a probability of lithium ions separating on the surface of the cathode and increasing a risk of short circuit for battery. At the same time, under the premise that the battery has been aging, the attenuation of the capacity of the battery will be further accelerated, and the aging of the service life of the battery will be further accelerated.

In order to solve the above problem, the present disclosure provides a battery charging method that may prevent battery aging, which may determine the charging current in the constant charging stage according to a present actual capacity of the battery obtained by measurement, thereby avoiding a condition of the battery aging caused by ultra-rate.

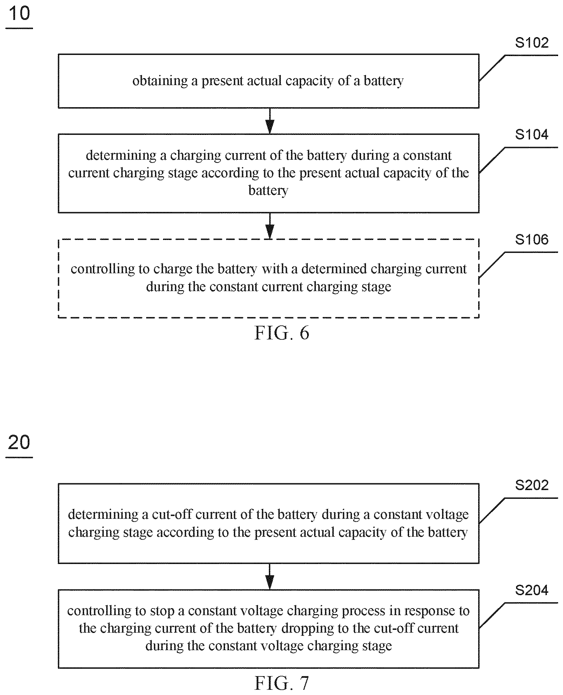

FIG. 6 is a flow chart illustrating a battery charging method according to an exemplary embodiment. The battery charging method illustrated in FIG. 6 may be applied to the wireless charging system 1 or 2 respectively illustrated in FIG. 1 or FIG. 2, and may also be applied to the wired charging systems 3, 4, and 5 respectively illustrated in FIG. 3 to FIG. 5.

Referring to FIG. 6, the battery charging method includes the following.

At block S102, a present actual capacity of a battery is obtained.

Taking the above wired charging system or wireless charging system as an example, the present capacity of the battery may be measured through a detection circuit (such as a voltameter) connected to the battery. During the measurement, the present capacity of the battery may be detected each time after the battery is charged, or the present capacity of the battery may also be detected before the next charging of the battery.

For example, the first control module 122 of the wireless charging apparatus 12 or 22 of the wireless charging system 1 or 2 may obtain the present actual capacity of the battery from the device to be charged 13. When the above detection circuit detects the present actual capacity of the battery after the battery is charged, the first control module 122 may directly obtain and store the present actual capacity of the battery for the next charging, or obtain the present actual capacity of the battery before the next charging, that is, the battery capacity of the battery may be stored in a storage module in the device to be charged 13 itself, so as to provide the capacity to the first control module 122 before next charging. When the above detection circuit detects the present actual capacity of the battery before the next charging, the first control module 122 may obtain and store the present actual capacity after the detection circuit in the device to be charged 13 measures the present actual capacity of the battery.

Or, the present actual capacity of the battery may also be obtained by the charging integrated circuit 323 of the device to be charged 32 of the wired charging system 3. Similarly, the detection circuit of the device to be charged 32 may measure the present capacity of the battery after the charging is completed, or before the next charging. When the measurement is performed after the charging is complete, it needs to store the present capacity of the battery for the next charging.

Or, the first control unit 414 of the power supply apparatus 41 of the wired charging system 4 or the first control unit 514 of the power supply apparatus 51 of the wired charging system 5 may also obtain the present actual capacity of the battery. Similarly, when the above detection circuit detects the present actual capacity of the battery after charging the battery ends, the first control unit 414 or 514 may directly obtain and store the present actual capacity of the battery for next charging, or the present actual capacity of the battery may be obtained before the next charging, that is, the battery capacity of the battery may be stored by a storage module of the device to be charged 42 or 52, so as to provide to the first control module 414 or 514 before next charging. When the above detection circuit detects the present actual capacity of the battery before the next charging, the first control unit 414 or 514 may obtain and store the present actual capacity after the detection circuit of the device to be charged 42 or 52 measures the present actual capacity of the battery.

Or, the second control module 135 of the device to be charged 13 of the wireless charging system 1 or 2 may also obtain the battery capacity of the battery. Similarly, the detection circuit of the device to be charged 13 may measure the present capacity of the battery after the charging is completed, or before the next charging. When the measurement is performed after the charging is completed, it needs to store the present capacity of the battery for the next charging.

Or, the second control unit 423 or 523 of the device to be charged 42 or 52 of the wired charging system 4 or 5 may also obtain the battery capacity of the battery. Similarly, the detection circuit of the device to be charged 42 or 52may measure the present capacity of the battery after the charging is completed, or before the next charging. When the measurement is performed after the charging is completed, it needs to store the present capacity of the battery for the next charging.

At block S104, a charging current of the battery during a constant current charging stage is determined according to the present actual capacity of the battery.

After the present actual capacity of the battery is obtained, the charging current of the battery in the constant current charging stage may be adjusted according to the present actual capacity of the battery, so that the service life of the battery may be improved.

The above operation of determining the charging current of the battery in the constant current charging stage according to the present actual capacity of the battery may be performed by, for example, the first control module 122 of the wireless charging apparatus 12 or 22 of the wireless charging system 1 or 2, or the first control unit 414 or 514 of the power supply apparatus 41 or 51 of the above wired charging system 4 or 5 after obtaining the present actual capacity of the battery.

In addition, the above operations may also be performed by the second control module 135 of the device to be charged 13 of the wireless charging system 1 or 2, or by the charging integrated circuit 323 of the device to be charged 32 of the wired charging system 3, or by the second control unit 423 or 523 of the device to be charged 42 or 52 in the above wired charging system 4 or 5 after obtaining the present actual capacity of the battery.

In some embodiments, for example, the present actual capacity of the battery may be firstly compared with the stored present actual capacity of the battery measured after the previous charging is completed or before the previous charging. When the present actual capacity of the battery is greater than or equal to the previous actual capacity, the charging current of the battery in the constant current charging stage is determined to be the previous charging current. When the present actual capacity of the battery is less than the previous actual capacity, a new charging current is calculated based on the present actual capacity, and the new charging current is determined to be the charging current of the battery in the constant current charging stage. For example, taking that the rated rate is 3C and the rated capacity of the battery is 1700mAh also as an example. The initial charging current is 3^{∗}1700mA=5.1A. When the present actual capacity of the battery is 1360mAh, the new charging current calculated based on the present actual capacity is 3^{∗}1360mAh, which is approximately 4.1A. Thus, the problem of ultra-rate use caused by charging with the original preset charging current after cycle charging and discharging of the battery is performed.

It should be noted that, the "previous time" mentioned above may be, for example, a previous time by one, that is, after each charging is completed or before charging, the present actual capacity of the battery requires to be measured, and the charging current of the battery in the constant current charging stage is determined according to the present actual capacity, and the present actual capacity is stored as the previous actual capacity of the battery for next determining the charging current. Or, considering that the actual capacity of the battery may not change much during two neighboring charging processes, the "previous time" may also be the previous times by N, in which N is a preset number of times threshold, that is, in the charging process every N times, the present actual capacity of the battery may be measured and stored after or before the battery is charged, and the charging current of the battery in the constant current charging stage is determined according to the present actual capacity, and the present actual capacity is stored as the previous actual capacity of the battery for next determining the charging current. The number of times threshold may be determined according to actual requirements in applications, which is not limited in the present disclosure.

In some embodiments, for example, the present actual capacity of the battery may also be input into a charging current determining model established based on big data learning. The charging current determining model may be, for example, a correspondence table between capacities of the battery and charging currents, and the correspondence table is, for example, obtained through statistical learning on a large amount of experimental data., A new charging current corresponding to the present actual capacity of the battery may be quickly queried according to the present actual capacity of the battery in the correspondence table. Or, the charging current determining model may also be a correspondence table of calculation coefficients between capacities of the battery and charging currents, in which the correspondence table is obtained, for example, through statistical learning on a large amount of experimental data. That is, when the battery capacity decreases, and the new charging current is calculated, the corresponding calculation coefficient (such as the calculation coefficient of 3 corresponding to the initial charging rate of 3C) will also change accordingly. After the corresponding new coefficient is queried in the correspondence table according to the present actual capacity of the battery, the new coefficient is multiplied by the present actual capacity to obtain a new charging current. Or, the charging current determining model may also be a training model based on artificial neural networks that has been trained based on a large amount of experimental data. The model takes capacities of the battery input and charging currents as output, so that the present actual capacity may be input into the trained model to obtain the charging current output by the model.

In some embodiments, the battery charging method 10 may further include the following.

At block S106, the battery is controlled to charge with the determined charging current during the constant current charging stage.

For example, when the charging current is determined by the first control module 122 of the wireless charging apparatus 12 or 22 of the wireless charging system 1 or 2, the output power of the wireless transmitting circuit 121 may be adjusted through the first control module 122, to enable the current of the direct current output by the first charging channel 134 to meet the charging requirement of the battery during the constant current charging stage, namely, the determined charging current. When the charging current is determined by the second control module 135 of the device to be charged 13 of the wireless charging system 1 or 2, the second control module 135 may feed back the charging current to the first control module 122 to enable the first control module 122 to adjust the power of the wireless transmitting circuit 121. That is, the operation of obtaining the present capacity of the battery and the operation of determining the charging current of the battery in the constant current charging stage according to the present capacity may be executed by the wireless charging apparatus 12 or 22, or, may also be executed by the device to be charged 13. When the operations are executed by the device to be charged 13, the determined charging current may be fed back to the wireless charging apparatus 12 or 22 to adjust the transmitting power of the wireless charging apparatus 12 or 22, so as to charge the battery with the determined charging current.

When the charging current is determined by the first control unit 414 or 514 of the power supply apparatus 41 or 51 of the wired charging system 4 or 5, the current of the direct current output by the rectifier circuit 411 or 511 is controlled by the first control unit 414 or 514. As a result, the charging current loaded on the battery of the device to be charged 42 or 52 meets the charging requirement of the battery during the constant current charging stage, namely, the determined charging current. When the charging current is determined by the second control unit 423 or 523 of the device to be charged 42 or 52, the second control unit 423 or 523 also requires to feed back the charging current to the first control unit 414 or 514, so that the first control unit 414 or 514 adjusts the output current of the rectifier circuit 411 or 511. That is, the operation of obtaining the present capacity of the battery and the operation of determining the charging current of the battery during the constant current charging stage according to the present capacity may be executed in the power supply apparatus 41 or 51, or, may also be executed in the device to be charged 42 or 52. When the operations is executed in the device to be charged 42 or 52, the determined charging current may be fed back to the power supply apparatus 41 or 51 to adjust the output current of the power supply apparatus 41 or 51 so as to charge the battery with the determined charging current.

According to the battery charging method in the embodiments of the present disclosure, through constant measurement of the capacity of the battery, the present actual capacity of the battery may be obtained, and the charging current during the constant current charging stage may be constantly adjusted according to the actual capacity, which minimizes the speed of aging and attenuation of the battery and improves the service life of the battery.

It should be clearly understood that the present disclosure describes how to form and use specific examples, but the principles of the present disclosure does not limit any details of these examples. On the contrary, based on the teaching of the content of the present disclosure, these principles may be applied to many other embodiments.

A FFC charging algorithm is performing constant current charging with a certain current having an initial rate to charge to a certain cut-off voltage, and then performing constant voltage charging with the cut-off voltage to charge to a certain cut-off current. The difference of the FFC charging algorithm to the above CCCV charging algorithm is that the cut-off voltage of the FFC charging algorithm is higher than a factory rated voltage of the battery. Taking the battery rated cut-off voltage of 4.2V as an example, in the FFC algorithm, its cut-off voltage is usually set as 4.25V The cut-off current at the end of the constant voltage charging stage is also higher than a factory rated cut-off current. For example, in the conventional CCCV algorithm, the rated cut-off current is 0.01C, while, in the FFC algorithm, its cut-off current may be set as 0.1C. During the process of the constant current charging, the voltage is set to exceed the rated voltage due to assuming that there is floating voltage of the battery, thus the actual voltage of the battery does not reach the rated voltage. The increase of the cut-off current in the constant voltage charging process means cutting off earlier, which is based on a full capacity of the battery. Similarly, when continues cycle charging and discharging is performed on the battery, the actual capacity of the battery decreases. In this way, when the capacity of the battery decays, cutting off by the same current will obviously exceed the actual current that the battery may withstand. At this time, the number of lithium ions released from an anode is greater, which makes structural stability of material of the anode further reduced, and speed up damage of the structural of the material, thereby reducing the service life of the battery.

Based on this, the embodiments of the present disclosure provide a method that may further improve the battery charging method to improve the service life of the battery.

FIG. 7 is a flow chart illustrating another battery charging method according to an exemplary embodiment. The difference from the battery charging method 10 illustrated in FIG. 6 is that the battery charging method 20 illustrated in FIG. 7 further provides a dynamic adjustment method for the cut-off current during the constant voltage charging stage.

Referring to FIG. 7, the battery charging method includes the following.

At block S202, a cut-off current of the battery during a constant voltage charging stage is determined according to the present actual capacity of the battery.

After the present actual capacity of the battery is obtained, the cut-off current of the battery in the constant voltage charging stage may be further adjusted according to the present actual capacity of the battery, so as to improve the service life of the battery.

The above operation of determining the cut-off current of the battery in the constant voltage charging stage according to the present actual capacity of the battery may be performed by, for example, the first control module 122 of the wireless charging apparatus 12 or 22 of the wireless charging system 1 or 2, or the first control unit 414 or 514 of the power supply apparatus 41 or 51 of the above wired charging system 4 or 5 after obtaining the present actual capacity of the battery.

In addition, the above operations may also be performed by the second control module 135 of the device to be charged 13 of the wireless charging system 1 or 2, or by the charging integrated circuit 323 of the device to be charged 32 of the wired charging system 3, or by the second control unit 423 or 523 of the device to be charged42 or 52 of the above wired charging system 4 or 5 after obtaining the present actual capacity of the battery.

Determining the cut-off current of the battery in the constant voltage charging stage includes: making the cut-off current increase as the present actual capacity of the battery decreases. In some embodiments, for example, the present actual capacity of the battery may be input into a cut-off current determining model established based on big data learning. The cut-off current determining model may be, for example, a correspondence table between capacities of the battery and cut-off currents, and the correspondence table is, for example, obtained through statistical learning on a large amount of experimental data. A new cut-off current corresponding to the present actual capacity of the battery may be quickly queried according to the present actual capacity of the battery in the correspondence table. Or, the cut-off current determining model may also be a training model based on artificial neural networks that has been trained based on a large amount of experimental data. The model takes the capacities of the battery as input and cut-off currents as output. Thus, the present actual capacity may be input into the trained model to obtain the cut-off current output by the model, and the cut-off current may be determined as the new cut-off current of the battery during the constant voltage charging stage.

At block S204, the constant voltage charging process is controlled to stop in response to the charging current of the battery dropping to the cut-off current during the constant voltage charging stage.

For example, when the cut-off current is determined by the first control module 122 of the wireless charging apparatus 12 or 22 of the wireless charging system 1 or 2, the first control module 122 may control the end of the current voltage charging process according to the determined cut-off current. When the cut-off current is determined by the second control module 135 of the device to be charged 13 of the wireless charging system 1 or 2, the second control module 135 may feed back the cut-off current to the first control module 122 to enable the first control module 122 to control the end of the constant voltage charging process according to the determined cut-off current. That is, the operation of obtaining the present capacity of the battery and the operation of determining the cut-off current of the battery during the constant voltage charging stage according to the present capacity may be executed by the wireless charging apparatus 12 or 22, or, may also be executed by the device to be charged 13. When the operations are executed by the device to be charged 13, the determined cut-off current may be fed back to the wireless charging apparatus 12 or 22, to enable the wireless charging apparatus 12 or 22 to control the end of the constant voltage charging process according to the determined cut-off current.

When the cut-off current is determined by the first control unit 414 or 514 of the power supply apparatus 41 or 51 of the wired charging system 4 or 5, the first control unit 414 or 514 may control the end of the constant voltage charging process according to the determined cut-off current. When the cut-off current is determined by the second control unit 423 or 523 of the device to be charged 42 or 52, the second control unit 423 or 523 also requires to feed back the cut-off current to the first control unit 414 or 514, to enable the first control unit 414 or 514 to control the end of the constant voltage charging process according to the determined cut-off current. That is, the operation of obtaining the present capacity of the battery and the operation of determining the cut-off current of the battery in the constant voltage charging stage according to the present capacity may be executed by the power supply apparatus 41 or 51, or may also be executed by the device to be charged 42 or 52. When the operations are executed by the device to be charged42 or 52, the determined cut-off current may be fed back to the power supply apparatus 41 or 51, to enable the power supply apparatus 41 or 51 to control the end of the constant voltage charging process according to the determined cut-off current.

According to another battery charging method provided by the embodiments of the present disclosure, the cut-off current of the battery during the constant voltage charging stage is further adjusted according to the actual capacity of the battery, so as to further slow down the speed of the aging and the attenuation of the battery and improve the service life of the battery.

Furthermore, the above battery charging method 10 or 20 may also be applied to the above multi-stage constant current charging process. The charging currents during M constant current charging stages are respectively determined according to the present actual capacity of the battery. The specific determining method may be as described above. It is conceivable for those skilled in the art that when the charging current is determined based on the charging current determining model, different constant current charging stages may have different charging current determining models, such as a first charging current determining model, a second charging current determining model, ..., and a M-th charging current determining model.

In addition, the above battery charging method 10 or 20 may also be applied to a stepped skip charging manner. In the stepped skip charging manner, the charging process may be divided into a plurality of constant current charging stages and a plurality of constant voltage charging stages. For example, in a first constant current charging stage, the battery is charged with a first constant charging current; when the voltage of the battery rises to a first cut-off voltage, the charging process enters a first constant voltage charging stage, and the battery is charged with a first constant voltage. In the first constant voltage charging process, when the charging current of the battery drops to the first cut-off current, a second constant current charging stage is entered, and the battery is charged with a second constant charging current. When the voltage of the battery rises to a second cut-off voltage, the charging process proceeds to a second constant voltage charging stage, and the battery is charged with a second constant voltage. In the second constant voltage charging process, when the charging current of the battery drops to a second cut-off current, a third constant current charging stage is entered; and the like.

When the above battery charging method 10 or 20 is applied to the stepped skip charging manner, the charging current of each constant current charging stage and the cut-off current of each constant voltage charging stage may be adjusted according to the actual capacity of the battery. Similarly, those skilled in the art should understand that when each charging current determining model is used to determine the charging current, different constant current charging stages may correspond to different charging current determining models. When each cut-off current determining model is used to determine the cut-off current, different constant voltage charging stages may correspond to different cut-off current determining models.

Those skilled in the art should understand that the above wireless charging systems 1 and 2 and wired charging systems 3 to 5 are only application examples of the battery charging method 10 or 20, and do not limit the battery charging method of the present disclosure. That is, the battery charging method 10 or 20 of the present disclosure may also be applied to other systems. The measurement of the actual capacity of the battery may not be limited to the above measurement by the voltameter. Because the capacity of the battery read after the end of each charging process is obtained under a certain rate (such as 3C). At present, this rate is generally a higher rate, so the value of the capacity under this rate may be less than the actual capacity. However, an initially factory-calibrated rated capacity during each test is usually the data obtained by testing under charging and discharging with 0.2C, and the data obtained under the higher rate may not match the actual situation. Therefore, when measuring the present actual capacity of the battery, the actual capacity of the battery may be measured under charging and discharging at a lower rate (such as 0.2C) to obtain a more accurate actual capacity of the battery.

In addition, it should be noted that the above drawings are only schematic illustrations of the processing included in the method according to the exemplary embodiments of the present disclosure, and are not intended for limitation. It is easy to understand that the processing illustrated in the above drawings does not indicate or limit the time sequence of these processes. In addition, it is easy to understand that these processes may be, for example, executed synchronously or asynchronously in a plurality of modules.

The following are apparatus embodiments of the present disclosure, which may be used to implement the method embodiments of the present disclosure. For details that are not disclosed in the apparatus embodiments of the present disclosure, please refer to the method embodiments of the present disclosure.

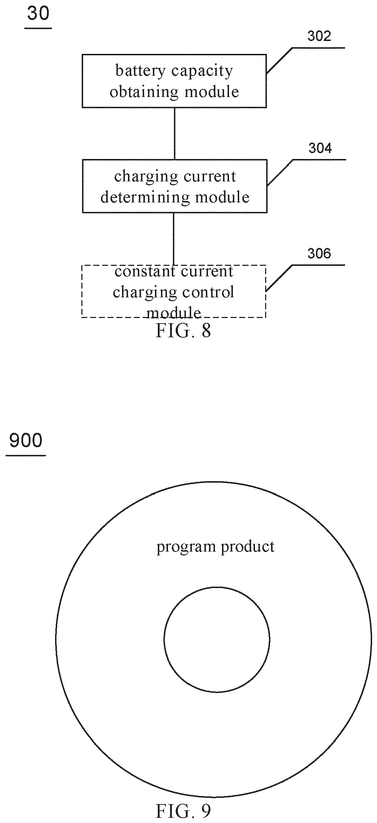

FIG. 8 is a block diagram illustrating a battery charging apparatus according to an exemplary embodiment.

Referring to FIG. 8, the battery charging apparatus 30 includes a battery capacity obtaining module 302 and a charging current determining module 304.

The battery capacity obtaining module 302 is configured to obtain a present actual capacity of a battery.

The charging current determining module 304 is configured to determine a charging current of the battery during a constant current charging stage according to the present actual capacity of the battery.

In some embodiments, the battery charging apparatus 30 further includes a constant current charging control module 306, configured to control to charge the battery with the determined charging current during the constant current charging stage.

In some embodiments, the charging current determining module 304 includes a first charging current determining unit, configured to calculate the charging current, based on a same rate used during the constant current charging stage in a previous charging process, according to the present actual capacity of the battery, in response to the present actual capacity of the battery being less than a stored actual capacity of the battery measured after a previous charging is completed or before a previous charging.

In some embodiments, the charging current determining module 304 further includes a second charging current determining unit, configured to determine a charging current of the battery during the constant current charging stage in the previous charging process as the charging current in response to the present actual capacity of the battery being greater than or equal to the stored actual capacity of the battery measured after the previous charging is completed or before the previous charging.

In some embodiments, the charging current determining module 304 includes a third charging current determining unit, configured to input the present actual capacity of the battery into a charging current determining model to output the charging current according to the charging current determining model; in which the charging current determining model is a model established based on big data learning.

In some embodiments, the battery charging apparatus 30 further includes a cut-off current determining module, configured to determine a cut-off current of the battery during a constant voltage charging stage according to the present actual capacity of the battery.

In some embodiments, the cut-off current determining module includes a first cut-off current determining unit, configured to input the present actual capacity of the battery into a cut-off current determining model to output the cut-off current according to the cut-off current determining model; in which the cut-off current determining model is a model established based on big data learning.

In some embodiments, the battery charging apparatus 30 further includes a constant voltage charging control module, configured to control to stop a constant voltage charging process in response to the charging current of the battery dropping to the cut-off current during the constant voltage charging stage.

In some embodiments, the charging current determining module 304 includes a fourth charging current determining unit, configured to determine charging currents of the battery during different constant current charging stages respectively according to the present actual capacity of the battery.

In some embodiments, the cut-off current determining module includes a second cut-off current determining unit, configured to determine cut-off currents of the battery during different constant voltage charging stages respectively according to the present actual capacity of the battery.

According to the apparatus for charging a battery in the embodiments of the present disclosure, through constant measurement of the capacity of the battery, the present actual capacity of the battery may be obtained, and the charging current during the constant current charging stage may be constantly adjusted according to the actual capacity, which minimizes the speed of the aging and attenuation of the battery and improves the service life of the battery.

It should be noted that the block diagrams illustrated in the above drawings are functional entities and do not necessarily correspond to physically or logically independent entities. These functional entities may be implemented in the form of software, or implemented in one or more hardware modules or integrated circuits, or implemented in different networks and/or processor devices and/or microcontroller devices.

FIG. 9 is a schematic diagram illustrating a computer-readable storage medium according to an exemplary embodiment.

Referring to FIG. 9, FIG. 9 illustrates a program product 900 configured to implement the above method according to an embodiment of the present disclosure. It may adopt a portable compact disk read-only memory (CD-ROM) including program codes, and may be installed in a terminal device, for example, running on a personal computer. However, the program product of the present disclosure is not limited to this. In the present disclosure, a readable storage medium may be any tangible medium that includes or stores programs, in which the programs may be used by or in combination with instruction execution systems, apparatus, or devices.

The above computer-readable medium carries one or a plurality of programs. When the above one or a plurality of programs are executed by a device, the computer-readable medium implements the battery charging method as illustrated in FIG. 6 or FIG. 7.

The above illustrates and describes the exemplary embodiments of the disclosure. It is understandable that the disclosure is not limited to the detailed structure, setting mode, or implementation as described herein; on the contrary, the disclosure is intended to cover various modifications and equivalent settings included in the spirit and scope of the attached claims.

## Claims

1. A battery charging method, comprising:
obtaining a present actual capacity of a battery; and
determining a charging current of the battery during a constant current charging stage according to the present actual capacity of the battery.

2. The method of claim 1, further comprising: controlling to charge the battery with the determined charging current during the constant current charging stage.

3. The method of claim 1 or 2, wherein determining the charging current of the battery during the constant current charging stage according to the present actual capacity of the battery comprises:
calculating the charging current, based on a same rate used during the constant current charging stage in a previous charging process, according to the present actual capacity of the battery, in response to the present actual capacity of the battery being less than a stored actual capacity of the battery measured after a previous charging is completed or before a previous charging.

4. The method of claim 3, wherein determining the charging current of the battery during the constant current charging stage according to the present actual capacity of the battery further comprises:
determining a charging current of the battery during the constant current charging stage in the previous charging process as the charging current in response to the present actual capacity of the battery being greater than or equal to the stored actual capacity of the battery measured after the previous charging is completed or before the previous charging.

5. The method of claim 1 or 2, wherein determining the charging current of the battery during the constant current charging stage according to the present actual capacity of the battery comprises:
inputting the present actual capacity of the battery into a charging current determining model to output the charging current according to the charging current determining model;
wherein the charging current determining model is a model established based on big data learning.

6. The method of claim 1 or 2, further comprising: determining a cut-off current of the battery during a constant voltage charging stage according to the present actual capacity of the battery.

7. The method of claim 6, wherein determining the cut-off current of the battery during the constant voltage charging stage according to the present actual capacity of the battery comprises:
inputting the present actual capacity of the battery into a cut-off current determining model to output the cut-off current according to the cut-off current determining model;
wherein the cut-off current determining model is a model established based on big data learning.

8. The method of claim 6, further comprising: controlling to stop a constant voltage charging process in response to the charging current of the battery dropping to the cut-off current during the constant voltage charging stage.

9. The method of claim 6, wherein determining the charging current of the battery during the constant current charging stage according to the present actual capacity of the battery comprises:
determining charging currents of the battery during different constant current charging stages respectively according to the present actual capacity of the battery.

10. The method of claim 9, wherein determining the cut-off current of the battery during the constant voltage charging stage according to the present actual capacity of the battery comprises:
determining cut-off currents of the battery during different constant voltage charging stages respectively according to the present actual capacity of the battery.

11. A battery charging apparatus, comprising:
a battery capacity obtaining module, configured to obtain a present actual capacity of a battery; and
a charging current determining module, configured to determine a charging current of the battery during a constant current charging stage according to the present actual capacity of the battery.

12. A device to be charged, comprising a battery and a control module;
wherein the control module is configured to obtain a present actual capacity of the battery and determine a charging current of the battery during a constant current charging stage according to the present actual capacity of the battery.

13. The device of claim 12, wherein the control module is further configured to control to charge the battery with the determined charging current during the constant current charging stage.

14. The device of claim 12, wherein the control module is further configured to provide the determined charging current to a wireless charging apparatus or a power supply apparatus.

15. The device of any one of claims 12 to 14, wherein the control module is configured to calculate the charging current, based on a same rate used during the constant current charging stage in a previous charging process, according to the present actual capacity of the battery in response to the present actual capacity of the battery being less than a stored actual capacity of the battery measured after a previous charging is completed or before a previous charging.

16. The device of claim 15, wherein the control module is further configured to determine a charging current of the battery during the constant current charging stage in the previous charging process as the charging current in response to the present actual capacity of the battery being greater than or equal to the stored actual capacity of the battery measured after the previous charging is completed or before the previous charging.

17. The device of any one of claims 12 to 14, wherein the control module is configured to input the present actual capacity of the battery into a charging current determining model to output the charging current according to the charging current determining model; wherein the charging current determining model is a model established based on big data learning.

18. The device of claims 12 to 14, wherein the control module is further configured to determine a cut-off current of the battery during the constant voltage charging stage according to the present actual capacity of the battery.

19. The device of claim 18, wherein the control module is configured to input the present actual capacity of the battery into a cut-off current determining model to output the cut-off current according to the cut-off current determining model; wherein the cut-off current determining model is a model established based on big data learning.

20. The device of claim 18, wherein the control module is configured to control to stop a constant voltage charging process in response to the charging current of the battery dropping to the cut-off current during the constant voltage charging stage.

21. The device of claim 18, wherein the control module is further configured to provide the determined cut-off current to a wireless charging apparatus or a power supply apparatus.

22. The device of claim 18, wherein the control module is further configured to determine charging currents of the battery during different constant current charging stages respectively according to the present actual capacity of the battery.

23. The device of claim 22, wherein the control module is further configured to determine cut-off currents of the battery during different constant voltage charging stages respectively according to the present actual capacity of the battery.

24. A wireless charging apparatus, comprising: a control module, configured to obtain a present actual capacity of the battery and determine a charging current of the battery during a constant current charging stage according to the present actual capacity of the battery.

25. The apparatus of claim 24, wherein the control module is further configured to control to charge the battery with the determined charging current during the constant current charging stage.

26. The apparatus of claim 24 or 25, wherein the control module is configured to calculate the charging current, based on a same rate used during the constant current charging stage in a previous charging process, according to the present actual capacity of the battery, in response to the present actual capacity of the battery being less than a stored actual capacity of the battery measured after a previous charging is completed or before a previous charging.

27. The apparatus of claim 26, wherein the control module is further configured to determine the charging current of the battery during the constant current charging stage in the previous charging process as the charging current in response to the present actual capacity of the battery being greater than or equal to the stored actual capacity of the battery measured after the previous charging is completed or before the previous charging.

28. The apparatus of claim 24 or 25, wherein the control module is configured to input the present actual capacity of the battery into a charging current determining model to output the charging current according to the charging current determining model; wherein the charging current determining model is a model established based on big data learning.

29. The apparatus of claim 24 or 25, wherein the control module is further configured to determine a cut-off current of the battery during a constant voltage charging stage according to the present actual capacity of the battery.

30. The apparatus of claim 29, wherein the control module is configured to input the present actual capacity of the battery into a cut-off current determining model to output the cut-off current according to the cut-off current determining model; wherein the cut-off current determining model is a model established based on big data learning.

31. The apparatus of claim 29, wherein the control module is configured to control to stop a constant voltage charging process in response to the charging current of the battery dropping to the cut-off current during the constant voltage charging stage.

32. The apparatus of claim 29, wherein the control module is further configured to determine charging currents of the battery during different constant current charging stages respectively according to the present actual capacity of the battery.

33. The apparatus of claim 32, wherein the control module is further configured to determine cut-off currents of the battery during different constant voltage charging stages respectively according to the present actual capacity of the battery.

34. A power supply apparatus, comprising: a control module, configured to obtain a present actual capacity of the battery and determine a charging current of the battery during a constant current charging stage according to the present actual capacity of the battery.

35. The apparatus of claim 34, wherein the control module is further configured to control to charge the battery with the determined charging current during the constant current charging stage.

36. The apparatus of claim 34 or 35, wherein the control module is configured to calculate the charging current, based on a same rate used during the constant current charging stage in a previous charging process, according to the present actual capacity of the battery, in response to the present actual capacity of the battery being less than a stored actual capacity of the battery measured after a previous charging is completed or before a previous charging.

37. The apparatus of claim 36, wherein the control module is further configured to determine a charging current of the battery during the constant current charging stage in the previous charging process as the charging current in response to the present actual capacity of the battery being greater than or equal to the stored actual capacity of the battery measured after the previous charging is completed or before the previous charging.

38. The apparatus of claim 34 or 35, wherein the control module is configured to input the present actual capacity of the battery into a charging current determining model to output the charging current according to the charging current determining model; wherein the charging current determining model is a model established based on big data learning.

39. The apparatus of claim 34 or 35, wherein the control module is further configured to determine a cut-off current of the battery during a constant voltage charging stage according to the present actual capacity of the battery.

40. The apparatus of claim 39, wherein the control module is configured to input the present actual capacity of the battery into a cut-off current determining model to output the cut-off current according to the cut-off current determining model; wherein the cut-off current determining model is a model established based on big data learning.

41. The apparatus of claim 39, wherein the control module is configured to control to stop a constant voltage charging process in response to the charging current of the battery dropping to the cut-off current during the constant voltage charging stage.

42. The device of claim 39, wherein the control module is configured to determine charging currents of the battery during different constant current charging stages respectively according to the present actual capacity of the battery.

43. The device of claim 42, wherein the control module is configured to determine cut-off currents of the battery during different constant voltage charging stages respectively according to the present actual capacity of the battery.

44. A computer-readable storage medium having computer executable instructions stored thereon, wherein when the executable instructions are executed by a processor, the method of any one of claims 1 to 10 is implemented.
